# EUROPEAN PATENT APPLICATION

(11) **EP 3 128 693 A1**
(43) Date of publication of application: **08.02.2017**
(21) Application number: 14890283.6
(22) Date of filing: 23.04.2014
(51) Int. Cl.: H04L 1/08, H04W 72/04, H04W 74/08

(54) **DATA TRANSMISSION METHOD AND APPARATUS**

(71) Applicant: Huawei Technologies Co., Ltd., Shenzhen, Guangdong 518129 (CN)
(72) Inventor: WU, Huifang, Shenzhen Guangdong 518129 (CN); WANG, Zongjie, Shenzhen Guangdong 518129 (CN)
(74) Representative: Epping - Hermann - Fischer
(86) International application number: PCT/CN2014/076028
(87) International publication number: WO 2015/161463

(57) **Abstract**

Embodiments of the present invention provide a data transmission method and apparatus. A transmission method on a terminal side includes: repeatedly sending, by a terminal, a data packet to a base station by using an uplink random access channel, so that the base station correctly receives the data packet in an energy accumulation manner. Correspondingly, a transmission method on a base station side includes: receiving, by a base station, a data packet repeatedly sent by a terminal by using an uplink random access channel; and combining, by the base station, all received data packets and obtaining information of the message part by means of parsing; where a preamble part of the data packet is repeatedly sent N times, a massage part of the data packet is repeatedly sent M times, 1≤N, and 1<M. In the solutions of the embodiments of the present invention, a terminal repeatedly sends a data packet to a base station, and the base station performs combination processing on all repeatedly sent data packets, and then obtains, by means of demodulation and from a data packet obtained after combination, information to be sent by the terminal. The base station can implement super-distance coverage in such an energy accumulation manner without increasing transmit power.

## Description

### TECHNICAL FIELD

The present invention relates to the field of communication technologies, and in particular, to a data transmission method and apparatus.

### BACKGROUND

With continuous development of information technologies, M2M (Mobile to Mobile, machine to machine, which refers to wireless communication from machine to machine) will be proposed in R13, and operators expect that an M2M service can exceed a coverage area of 20 dB of a GSM (Global system for mobile communication, Global System for Mobile Communications).

In the conventional technology, a UMTS (Universal mobile system, Universal Mobile communication System) technology has a gain of 7 to 8 dB in coverage compared with the GSM. Therefore, to meet a coverage requirement of the operators, a UMTS terminal that supports the M2M service needs to increase coverage of a gain of approximately 12 dB on the basis of the current UMTS technology. Currently, no other effective solution than increasing transmit power is found.

### SUMMARY

A data transmission method and apparatus according to embodiments of the present invention are used to implement super-distance coverage while reducing transmit power.

In view of this, the embodiments of the present invention provide the following technical solutions:
According to a first aspect, an embodiment of the present invention provides a data transmission method, where the method includes:
   repeatedly sending, by a terminal, a data packet to a base station by using an uplink random access channel, so that the base station correctly receives the data packet in an energy accumulation manner, where a preamble part of the data packet is repeatedly sent N times, a massage part of the data packet is repeatedly sent M times, 1≤N, and 1<M.

In a first possible implementation manner of the first aspect, if a quantity of times the preamble part is repeatedly sent is corresponding to an access timeslot point and N=M, the repeatedly sending, by a terminal, a data packet to a base station by using an uplink random access channel includes:
determining, by the terminal, an access timeslot point corresponding to the quantity N of times the preamble part is repeatedly sent; and
repeatedly sending, by the terminal, the data packet to the base station at the determined access timeslot point, so that the base station correctly receives the data packet.

In a second possible implementation manner of the first aspect, if N=M, the repeatedly sending, by a terminal, a data packet to a base station by using an uplink random access channel includes:
repeatedly sending, by the terminal, the data packet to the base station at a randomly selected access timeslot point, so that the base station correctly receives the data packet.

With reference to the first or the second possible implementation manner of the first aspect, in a third possible implementation manner, if signatures of the preamble part are grouped and each group is corresponding to a different quantity of times the message part is repeatedly sent, the repeatedly sending, by a terminal, a data packet to a base station by using an uplink random access channel further includes:
determining, by the terminal, a signature group corresponding to the quantity M of times the message part is repeatedly sent, and determining, according to the signature group, a signature used by the preamble part.

In a fourth possible implementation manner of the first aspect, if signatures of the preamble part are grouped, each group is corresponding to a different access timeslot point and a different quantity of times the message part is repeatedly sent, and N=M, the repeatedly sending, by a terminal, a data packet to a base station by using an uplink random access channel includes:
determining, by the terminal, a signature group corresponding to the quantity M of times the message part is repeatedly sent;
determining, by the terminal according to the signature group, an access timeslot point at which the data packet is sent and a signature used by the preamble part; and
repeatedly sending, by the terminal, the data packet to the base station at the determined access timeslot point, so that the base station correctly receives the data packet.

In a fifth possible implementation manner of the first aspect, if signatures of the preamble part are grouped, each group is corresponding to a different quantity of times the message part is repeatedly sent, N=1, and M>1, the repeatedly sending, by a terminal, a data packet to a base station by using an uplink random access channel includes:
determining, by the terminal, a signature group corresponding to the quantity M of times the message part is repeatedly sent, and determining, according to the signature group, a signature used by the preamble part.

With reference to the first aspect or any one of the first to the fifth possible implementation manners of the first aspect, in a sixth possible implementation manner, the method further includes:
separately calculating actual transmit power of the preamble part and actual transmit power of the message part according to initial transmit power, a transmit power ramp step, and the quantities of times of repeated sending.

According to a second aspect, an embodiment of the present invention provides a data transmission method, where the method includes:
receiving, by a base station, a data packet repeatedly sent by a terminal by using an uplink random access channel, where a preamble part of the data packet is repeatedly sent N times, a massage part of the data packet is repeatedly sent M times, 1≤N, and 1<M; and
combining, by the base station, all received data packets and obtaining information of the message part by means of parsing.

In a first possible implementation manner of the second aspect, if a quantity of times the preamble part is repeatedly sent is corresponding to an access timeslot point and N=M, the combining, by the base station, all received data packets and obtaining information of the message part by means of parsing includes:
determining, by the base station according to an access timeslot point at which the data packet is received, the quantity N of times the preamble part is repeatedly sent and determining, according to N=M, the quantity M of times the message part is repeatedly sent; and
combining, by the base station, message parts received in the M times, and obtaining the information from the message parts by means of parsing.

In a second possible implementation manner of the second aspect, ifN=M, the combining, by the base station, all received data packets and obtaining information of the message part by means of parsing includes:
combining, by the base station, all currently received preamble parts, determining that a quantity of receiving times corresponding to a time at which a signature is correctly obtained by means of parsing is the quantity N of times the preamble part is repeatedly sent, and determining, according to N=M, the quantity M of times the message part is repeatedly sent; and
combining, by the base station, message parts received in the M times, and obtaining the information from the message parts by means of parsing.

With reference to the first or the second possible implementation manner of the second aspect, in a third possible implementation manner, if signatures of the preamble part are grouped and each group is corresponding to a different quantity of times the message part is repeatedly sent, the combining, by the base station, all received data packets and obtaining information of the message part by means of parsing further includes:
after determining the quantity N of times the preamble part is repeatedly sent, searching, by the base station, for a signature group to which the signature belongs, and determining, according to the signature group, the quantity M of times the message part is repeatedly sent; and
the combining, by the base station, message parts received in the M times, and obtaining the information from the message parts by means of parsing includes:
   when the quantity of times of repeated sending determined according to the signature group is equal to the quantity of times of repeated sending determined according to N=M, performing, by the base station, the step of combining message parts received in the M times.

In a fourth possible implementation manner of the second aspect, if signatures of the preamble part are grouped and each group is corresponding to a different quantity of times the message part is repeatedly sent, the combining, by the base station, all received data packets and obtaining information of the message part by means of parsing includes:
after obtaining a signature from the preamble part by means of parsing, searching, by the base station, for a signature group to which the signature belongs, and determining, according to the signature group, the quantity M of times the message part is repeatedly sent; and
combining, by the base station, message parts received in the M times, and obtaining the information from the message parts by means of parsing.

In a fifth possible implementation manner of the second aspect, if signatures of the preamble part are grouped and each group is corresponding to a different access timeslot point and a different quantity of times the message part is repeatedly sent, the combining, by the base station, all received data packets and obtaining information of the message part by means of parsing includes:
determining, by the base station according to an access timeslot point at which the data packet is received, a signature group to which a signature of the preamble part belongs, and determining, according to the signature group, the quantity M of times the message part is repeatedly sent; and
combining, by the base station, message parts received in the M times, and obtaining the information from the message parts by means of parsing.

In a sixth possible implementation manner of the second aspect, if signatures of the preamble part are grouped, each group is corresponding to a different quantity of times the message part is repeatedly sent, N=1, and M>1, the combining, by the base station, all received data packets and obtaining information of the message part by means of parsing includes:
after obtaining a signature from the received preamble part by means of parsing, searching, by the base station, for a signature group to which the signature belongs, and determining, according to the signature group, the quantity M of times the message part is repeatedly sent; and
combining, by the base station, message parts received in the M times, and obtaining the information from the message parts by means of parsing.

According to a third aspect, an embodiment of the present invention provides a data transmission apparatus, where the apparatus includes:
a sending unit, configured to repeatedly send a data packet to a base station by using an uplink random access channel, so that the base station correctly receives the data packet in an energy accumulation manner, where a preamble part of the data packet is repeatedly sent N times, a massage part of the data packet is repeatedly sent M times, 1≤N, and 1<M.

In a first possible implementation manner of the third aspect, if a quantity of times the preamble part is repeatedly sent is corresponding to an access timeslot point and N=M, the sending unit includes:
a first timeslot point determining unit, configured to determine an access timeslot point corresponding to the quantity N of times the preamble part is repeatedly sent; and
a first sending subunit, configured to repeatedly send the data packet to the base station at the determined access timeslot point, so that the base station correctly receives the data packet.

In a second possible implementation manner of the third aspect, if N=M,
the sending unit is specifically configured to repeatedly send the data packet to the base station at a randomly selected access timeslot point, so that the base station correctly receives the data packet.

With reference to the first or the second possible implementation manner of the third aspect, in a third possible implementation manner, if signatures of the preamble part are grouped and each group is corresponding to a different quantity of times the message part is repeatedly sent, the sending unit further includes:
a first signature group determining unit, configured to: determine a signature group corresponding to the quantity M of times the message part is repeatedly sent, and determine, according to the signature group, a signature used by the preamble part.

In a fourth possible implementation manner of the third aspect, if signatures of the preamble part are grouped, each group is corresponding to a different access timeslot point and a different quantity of times the message part is repeatedly sent, and N=M, the sending unit includes:
a second signature group determining unit, configured to determine a signature group corresponding to the quantity M of times the message part is repeatedly sent;
a second timeslot point determining unit, configured to determine, according to the signature group, an access timeslot point at which the data packet is sent and a signature used by the preamble part; and
a second sending subunit, configured to repeatedly send the data packet to the base station at the determined access timeslot point, so that the base station correctly receives the data packet.

In a fifth possible implementation manner of the third aspect, if signatures of the preamble part are grouped, each group is corresponding to a different quantity of times the message part is repeatedly sent, N=1, and M>1, the sending unit includes:
a third signature group determining unit, configured to: determine a signature group corresponding to the quantity M of times the message part is repeatedly sent, and determine, according to the signature group, a signature used by the preamble part; and
a third sending subunit, configured to repeatedly send the data packet to the base station, where the quantity M of times the message part of the data packet is repeatedly sent is corresponding to a signature group to which the signature of the preamble part of the data packet belongs.

With reference to the third aspect or any one of the first to the fifth possible implementation manners of the third aspect, in a sixth possible implementation manner, the apparatus further includes:
a calculation unit, configured to separately calculate actual transmit power of the preamble part and actual transmit power of the message part according to initial transmit power, a transmit power ramp step, and the quantities of times of repeated sending.

According to a fourth aspect, an embodiment of the present invention provides a data transmission apparatus, where the apparatus includes:
a receiving unit, configured to receive a data packet repeatedly sent by a terminal by using an uplink random access channel, where a preamble part of the data packet is repeatedly sent N times, a massage part of the data packet is repeatedly sent M times, 1≤N, and 1<M; and
a combination and parsing unit, configured to combine all received data packets and obtain information of the message part by means of parsing.

In a first possible implementation manner of the fourth aspect, if a quantity of times the preamble part is repeatedly sent is corresponding to an access timeslot point and N=M, the combination and parsing unit includes:
a first determining unit, configured to: determine, according to an access timeslot point at which the data packet is received, the quantity N of times the preamble part is repeatedly sent, and determine, according to N=M, the quantity M of times the message part is repeatedly sent; and
a combination and parsing subunit, configured to: combine message parts received in the M times, and obtain the information from the message parts by means of parsing.

In a second possible implementation manner of the fourth aspect, if N=M, the combination and parsing unit includes:
a second determining unit, configured to: combine all currently received preamble parts, determine that a quantity of receiving times corresponding to a time at which a signature is correctly obtained by means of parsing is the quantity N of times the preamble part is repeatedly sent, and determine, according to N=M, the quantity M of times the message part is repeatedly sent; and
a combination and parsing subunit, configured to: combine message parts received in the M times, and obtain the information from the message parts by means of parsing.

With reference to the first or the second possible implementation manner of the fourth aspect, in a third possible implementation manner, if signatures of the preamble part are grouped and each group is corresponding to a different quantity of times the message part is repeatedly sent, the combination and parsing unit further includes:
a third determining unit, configured to: after the quantity N of times the preamble part is repeatedly sent is determined, search for a signature group to which the signature belongs, and determine, according to the signature group, the quantity M of times the message part is repeatedly sent; and
the combination and parsing subunit is specifically configured to: when the quantity of times of repeated sending determined according to the signature group is equal to the quantity of times of repeated sending determined according to N=M, combine the message parts received in the M times, and obtain the information from the message parts by means of parsing.

In a fourth possible implementation manner of the fourth aspect, if signatures of the preamble part are grouped and each group is corresponding to a different quantity of times the message part is repeatedly sent, the combination and parsing unit includes:
a fourth determining unit, configured to: after a signature is obtained from the preamble part by means of parsing, search for a signature group to which the signature belongs, and determine, according to the signature group, the quantity M of times the message part is repeatedly sent; and
a combination and parsing subunit, configured to: combine message parts received in the M times, and obtain the information from the message parts by means of parsing.

In a fifth possible implementation manner of the fourth aspect, if signatures of the preamble part are grouped and each group is corresponding to a different access timeslot point and a different quantity of times the message part is repeatedly sent, the combination and parsing unit includes:
a fifth determining unit, configured to: determine, according to an access timeslot point at which the data packet is received, a signature group to which a signature of the preamble part belongs, and determine, according to the signature group, the quantity M of times the message part is repeatedly sent; and
a combination and parsing subunit, configured to: combine message parts received in the M times, and obtain the information from the message parts by means of parsing.

In a sixth possible implementation manner of the fourth aspect, if signatures of the preamble part are grouped, each group is corresponding to a different quantity of times the message part is repeatedly sent, N=1, and M>1, the combination and parsing unit includes:
a sixth determining unit, configured to: after a signature is obtained from the received preamble part by means of parsing, search for a signature group to which the signature belongs, and determine, according to the signature group, the quantity M of times the message part is repeatedly sent; and
a combination and parsing subunit, configured to: combine message parts received in the M times, and obtain the information from the message parts by means of parsing.

According to a fifth aspect, an embodiment of the present invention provides a data transmission apparatus, where the apparatus includes at least one processor, at least one network interface, a memory, and at least one communications bus;
the communications bus is configured to implement connection and communication between the at least one processor, the at least one network interface, and the memory;
the at least one processor is configured to execute a program instruction stored in the memory, where the program instruction includes a sending unit; and
the sending unit is configured to repeatedly send a data packet to a base station by using an uplink random access channel, so that the base station correctly receives the data packet in an energy accumulation manner, where a preamble part of the data packet is repeatedly sent N times, a massage part of the data packet is repeatedly sent M times, 1≤N, and 1<M.

In a first possible implementation manner of the fifth aspect, the program instruction further includes a calculation unit; and
the calculation unit is configured to separately calculate actual transmit power of the preamble part and actual transmit power of the message part according to initial transmit power, a transmit power ramp step, and quantities of times of repeated sending.

According to a sixth aspect, an embodiment of the present invention provides a data transmission apparatus, where the apparatus includes at least one processor, at least one network interface, a memory, and at least one communications bus;
the communications bus is configured to implement connection and communication between the at least one processor, the at least one network interface, and the memory;
the at least one processor is configured to execute a program instruction stored in the memory, where the program instruction includes a receiving unit and a combination and parsing unit;
the receiving unit is configured to receive a data packet repeatedly sent by a terminal by using an uplink random access channel, where a preamble part of the data packet is repeatedly sent N times, a massage part of the data packet is repeatedly sent M times, 1≤N, and 1<M; and
the combination and parsing unit is configured to combine all received data packets and obtain information of the message part by means of parsing.

In a handover method and apparatus according to the embodiments of the present invention, a terminal repeatedly sends a data packet to a base station, and the base station performs combination processing on all repeatedly sent data packets, and then obtains, by means of demodulation and from a data packet obtained after combination, information to be sent by the terminal. The base station can implement super-distance coverage in such an energy accumulation manner without increasing transmit power.

### BRIEF DESCRIPTION OF DRAWINGS

To describe the technical solutions in the embodiments of the present invention art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a data transmission method on a base station side according to an embodiment of the present invention;
FIG. 2 is a flowchart of a manner 1 in which a base station correctly receives a data packet according to an embodiment of the present invention;
FIG. 3 is a flowchart of a manner 2 in which a base station correctly receives a data packet according to an embodiment of the present invention;
FIG. 4 is a flowchart of a manner 3 in which a base station correctly receives a data packet according to an embodiment of the present invention;
FIG. 5 is a flowchart of a manner 4 in which a base station correctly receives a data packet according to an embodiment of the present invention;
FIG. 6 is a flowchart of a manner 5 in which a base station correctly receives a data packet according to an embodiment of the present invention;
FIG. 7 is a flowchart of a manner 6 in which a base station correctly receives a data packet according to an embodiment of the present invention;
FIG. 8 is a schematic diagram of a data transmission apparatus on a base station side according to an embodiment of the present invention; and
FIG. 9 is a schematic diagram of hardware composition of a data transmission apparatus on a base station side according to an embodiment of the present invention.

### DESCRIPTION OF EMBODIMENTS

To enable a person skilled in the art to better understand the solutions in the embodiments of the present invention, the following describes the embodiments of the present invention in more detail with reference to accompanying drawings and implementation manners.

Data transmission solutions provided in the embodiments of the present invention are to implement super-distance coverage of a UMTS (Universal mobile telecommunication system, Universal Mobile Telecommunications Technology). If the super-distance coverage is understood from a perspective of a coverage area, a case of a coverage area beyond ten kilometers may be defined as super-distance coverage; or if the super-distance coverage is understood from a perspective of an application scenario, a case applied to an open scenario such as a sea surface or desert may be defined as super-distance coverage.

Increase in a coverage area may be generally implemented by increasing transmit power. However, in addition to increasing power consumption, increase in the transmit power may further increase inter-user interference and cause a near-far effect. Therefore, the present invention provides a new data transmission solution, so that super-distance coverage is implemented without increasing transmit power, while even reducing transmit power.

A data transmission process according to the embodiments of the present invention involves both a base station side and a terminal side. A base station and a terminal need to cooperate with each other to implement super-distance coverage. The terminal repeatedly sends a data packet, and the base station repeatedly receives and parses one by one data packets repeatedly sent by the terminal, and combines information obtained from the data packets by means of parsing, to achieve an objective of correctly receiving a data packet from the terminal. That is, in a super-distance coverage scenario, if transmit power in a non-super-distance coverage scenario is still used, the base station can receive a data packet sent by the terminal, but because of impact of channel quality or external interference, the base station may not correctly obtain information in the data packet by means of parsing, that is, the base station cannot correctly receive the data packet. In the embodiments of the present invention, in consideration of a fact that quality of or interference encountered by a channel between a base station and a terminal may vary with time, the terminal repeatedly sends a data packet to the base station multiple times, and the base station parses a data packet received each time and combines information obtained from the data packets by means of parsing, to correctly receive the data packet.

The following first explains a data transmission process according to an embodiment of the present invention from a terminal side.

A terminal repeatedly sends a data packet to a base station by using an uplink random access channel, so that the base station correctly receives the data packet in an energy accumulation manner, where a preamble part of the data packet is repeatedly sent N times, a massage part of the data packet is repeatedly sent M times, 1≤N, and 1<M.

To meet a coverage requirement of an M2M service, the terminal repeatedly transmits a to-be-sent M2M data packet multiple times on a PRACH (Physical random access channel, physical random access channel) or an E-RACH (Enhancement random access channel, enhanced random access channel). A preamble part preamble is repeatedly sent N times, a message part message is repeatedly sent M times, and both N and M are positive integers.

According to an actual application requirement, there may be the following two relationships between a quantity of times the preamble part is repeatedly sent and a quantity of times the message part is repeatedly sent:
(1) N=M>1; such a relationship indicates that both the preamble part and the message part need to be repeatedly sent and the preamble part and the message part are repeatedly sent a same quantity of times.
(2) N=1, and M>1; such a relationship indicates that the preamble part is not repeatedly sent and the message part is repeatedly sent.

In this embodiment, the terminal repeatedly sends the data packet to the base station. To ensure that the base station can correctly receive the data packet, the base station needs to be informed in advance of a quantity of times the terminal performs repeated sending. Then, the base station can receive the preamble N times, and receive the message M times, and further perform combination and parsing to obtain information sent by the terminal. With reference to the two relationships between the preamble and the message, the following explains solutions in which the terminal informs the base station of the quantity of times of repeated sending.
(1) For the relationship of N=M>1, the following implementation solutions are provided in the embodiments of the present invention.

### Embodiment 1

A terminal informs, by using an access timeslot point, a base station of a quantity N of times a preamble part is repeated, that is, the base station is informed of a quantity M of times a message part is repeated, because N=M. A corresponding implementation solution is as follows: Before sending a data packet, the terminal first determines a corresponding access timeslot point according to a quantity N of times a preamble is repeated, and then repeatedly sends the data packet to the base station at the determined access timeslot point.

Existing 15 access timeslot points are divided, and when performing access at different access timeslot points, the terminal uses different quantities of times the preamble is repeatedly sent, that is, the access timeslot point is corresponding to the quantity of times the preamble is repeated (which is also equivalent to establishing a correspondence between the access timeslot point and a quantity of times a message is repeatedly sent because N=M). This correspondence is configured on the base station and delivered by the base station to a corresponding terminal in a broadcasting form. For example, access timeslot points numbered 1, 2, 3, and 4 may be respectively corresponding to repeating the preamble once, 3 times, twice, and 7 times, that is, the access timeslot points are in a one-to-one correspondence with quantities of times the preamble is repeated; or the access timeslot points in the foregoing example may be respectively corresponding to repeating a preamble once, 3 times, twice, and 3 times, that is, there is only a mapping relationship between the access timeslot points and quantities of times the preamble is repeated, instead of a one-to-one correspondence. Specifically, a correspondence and a corresponding manner between an access timeslot point and a quantity of times the preamble is repeated may not be limited in this embodiment of the present invention, provided that when learning a quantity of times the preamble is repeatedly sent, the terminal can know an access timeslot point at which the terminal performs access, and when learning an access timeslot point at which the terminal sends data, the base station can know a corresponding quantity of times the preamble is repeatedly sent.

In the foregoing manner, for example, the access timeslot point 2 is corresponding to repeating a preamble 3 times, when the terminal needs to repeatedly send a preamble 3 times, the terminal uses the access timeslot point 2 as an access timeslot point at which a data packet is repeatedly sent, and preamble information is repeatedly sent 3 times at the timeslot point. Correspondingly, if the base station receives a data packet at the access timeslot point 2, the base station may learn, according to the known correspondence, that the terminal currently needs to repeatedly send a preamble 3 times.

Because the preamble part and the message part are repeatedly sent a same quantity of times (that is, N=M), when the base station learns the quantity of times the preamble is repeated, the base station learns the quantity of times the message is repeated, and performs, according to the quantity of times the message is repeated, combination and parsing to obtain information sent by the terminal.

### Embodiment 2

In the relationship of N=M>1, in addition to using an access timeslot point to inform a base station of a quantity of times a preamble is repeatedly sent in the foregoing Embodiment 1, a terminal may further randomly select an access timeslot point (that is, there is no correspondence between an access timeslot point and a quantity N of times the preamble is repeated, and the terminal may perform a random access operation at any access timeslot point) to repeatedly send a data packet.

Corresponding to this solution, the base station is always in a preamble receiving state, and constantly attempts to decode preamble information. That is, each time the base station receives a preamble, the base station may attempt to perform combination and parsing once, to determine whether a signature signature used by the preamble can be correctly obtained by means of parsing.

If the quantity N of times the preamble is repeatedly sent is 3, generally, the base station cannot correctly obtain the preamble information by means of demodulation after receiving the preamble once or twice; therefore, the base station cannot obtain the signature used by the terminal from the preamble. Only after the base station receives the preamble 3 times and combines the preambles, the base station can correctly obtain the signature by means of parsing. In this way, in a manner of constantly attempting to perform decoding and accumulation counting, the base station can also correctly obtain the quantity N of times the preamble is repeatedly sent, and further learn, according to N=M, a quantity M of times a message is repeatedly sent.

### Embodiment 3

In Embodiment 1, there is a correspondence between an access timeslot point and a quantity of times a preamble part is repeated; therefore, the base station may determine, by using an access timeslot point at which the preamble is received, the quantity N of times the preamble part is repeatedly sent, and further determine, according to M=N, the quantity of times the message part is repeatedly sent. In Embodiment 2, although there is no correspondence, the base station may determine, in a manner of constantly attempting to obtain a signature of the preamble by means of parsing and accumulation counting, the quantity N of times the preamble part is repeatedly sent, and further determine, according to M=N, the quantity of times the message part is repeatedly sent.

In consideration of a fact that in an actual application process, channel quantity may change at any time, accuracy in determining a quantity of repetition times by the base station may be affected. For example, the quantity N of times the terminal repeatedly sends the preamble is 4, current channel quality is good, and a signature is correctly obtained by means of parsing after the base station receives and combines preambles sent by the terminal in 3 times; in this case, the base station may erroneously determine that N=M=3. To ensure the accuracy in determining a quantity of repetition times by the base station, corresponding to the relationship of N=M, the present invention further provides Embodiment 3 that is used by the base station to determine, by using another solution after the quantity N of times the preamble is repeated is determined, the quantity M of times the message is repeated, and verifies, by using the quantity M of times the message is repeated, accuracy of the quantities of repetition times determined in Embodiment 1 and Embodiment 2. Specific reflection is as follows: The quantity M of times the base station repeatedly sends the message part is corresponding to a signature group to which a signature of the preamble part belongs. A corresponding implementation solution is as follows: Before sending a data packet, the terminal first searches for a signature group corresponding to a quantity M of times a message is repeatedly sent, determines a signature used by a preamble part from the found signature group, and then repeatedly sends the data packet.

In consideration of a fact that a preamble part includes a signature and the base station can correctly obtain the signature by means of demodulation once the base station correctly receives the preamble part; therefore, in this embodiment, existing 16 signatures may be grouped, so that different signature groups are corresponding to different quantities of times the message is repeatedly sent, that is, the signature group is corresponding to the quantity of times the message is repeated (because N=M, herein, it is also equivalent to establishing a correspondence between the signature group and the quantity of times the preamble is repeatedly sent). For example, signature groups numbered 1, 2, 3, and 4 may be respectively corresponding to repeating the message twice, 3 times, 5 times, and 7 times, that is, there is a one-to-one correspondence between the signature group and the quantity of times the message is repeated; or the signature groups in the foregoing example may be respectively corresponding to repeating the message twice, 3 times, twice, and 5 times; or the signature groups 1 to 3 are corresponding to repeating the message twice, the signature groups 4 and 5 are corresponding to repeating the message 3 times, or the like, that is, there is only a mapping relationship between the signature group and the quantity of times the message is repeated, instead of a one-to-one correspondence. Specifically, a correspondence and a corresponding manner between a signature group and a quantity of times the message is repeated may not be limited in this embodiment of the present invention, provided that when determining a quantity of times the message is repeatedly sent, the terminal can know a signature that may be used by the preamble part, and after obtaining, by means of parsing, a signature from the preamble sent from the terminal, the base station can know a corresponding quantity of times the message is repeatedly sent.

In this way, after determining, by using an access timeslot or in a manner such as constantly attempting to perform parsing, the quantity N of times the preamble is repeatedly sent and obtaining the signature from the preamble by means of parsing, the base station may determine, according to a signature group to which the signature belongs, the quantity M of times the message is repeatedly sent. This manner is not affected by change of channel quality and has high accuracy; therefore, according to an actual need, this manner may be used to verify accuracy of the quantities of times of repeated sending determined in the solutions in Embodiment 1 and Embodiment 2.

In addition, it should be noted that based on the solution provided in Embodiment 3, that is, a correspondence between a signature group and a quantity of times of repeated sending is pre-established, and the base station and the terminal are informed of the correspondence in advance, so that the data packet sent by the terminal meets the following requirement: A signature group to which a signature used by the preamble part belongs is corresponding to a quantity of times of repeated sending. On this basis, after obtaining the signature by means of parsing (the signature is obtained by using the foregoing introduced access timeslot point or in the manner such as constantly attempting to perform parsing, which may not be specifically limited in this embodiment of the present invention), the base station may further directly determine, according to the correspondence between a signature group and a quantity of repetition times, the quantity of times the preamble is repeatedly sent and the quantity of times the message is repeatedly sent. That is, based on the solution provided in Embodiment 3, there are two solutions for the base station to determine the quantity of times of repeated sending, which are explained in the following.

### Embodiment 4

In the relationship of N=M>1, a terminal may further inform, by using the following two correspondences, a base station of a quantity of times a preamble is repeatedly sent and a quantity of times a message is repeatedly sent: As described above, existing 16 signatures are grouped, so that different signature groups are corresponding to different quantities of times the message is repeatedly sent, that is, a correspondence between a signature group and a quantity of times the message is repeated is established (because N=M, therein, it is also equivalent to establishing a correspondence between a signature group and a quantity of times the preamble is repeated); in addition, further, existing 15 access timeslot points are divided, so that a correspondence between a signature group and an access timeslot point is established. It should be noted that both the correspondences in this embodiment may be configured on the base station, and then delivered to the terminal by the base station in a broadcasting manner, that is, both the base station and the terminal may learn these two correspondences in advance.

A corresponding implementation solution is as follows: Before sending a data packet, the terminal first determines a signature group corresponding to a quantity M of times a message is repeatedly sent, and then determines the following two pieces of information according to the signature group: The first is determining an access timeslot point corresponding to the signature group, so that the data packet is subsequently repeatedly sent at the access timeslot point; and the other is selecting a signature used by a preamble part from the signature group. In this way, after receiving the data packet repeatedly sent by the terminal, the base station may first determine a corresponding signature group according to an access timeslot point, and further determine, according to the signature group, the quantity M of times the message is repeatedly sent.
(2) For the relationship of N=1 and M>1, the following implementation solutions are provided in the embodiments of the present invention.

### Embodiment 5

In this embodiment, a preamble part is not repeatedly sent, but a message part is repeatedly sent. Therefore, a base station does not need to be informed of a quantity N of times the preamble part is repeatedly sent. However, to correctly receive and demodulate information in the message part, the base station still needs to be informed, in a particular manner, of a quantity M of times the message part is repeatedly sent. A specific manner is as follows:
Existing 16 signatures are grouped, so that different signature groups are corresponding to different quantities M of times the message is repeatedly sent, that is, a correspondence between a signature group and a quantity of times the message is repeatedly sent is established, and the correspondence is configured on the base station and delivered by the base station to a corresponding terminal in a broadcasting form, that is, both the terminal and the base station may learn the correspondence in advance. In this way, after correctly obtaining a signature from the received preamble by means of parsing, the base station may determine, by using the correspondence, the quantity of times the message part is repeated.

It should be noted that the correspondence and a corresponding manner between a signature group and a quantity of times the message is repeated may not be limited in this embodiment of the present invention. For a specific process, reference may be made to the foregoing introduction, and details are not described herein.

It should be noted that when a data packet is repeatedly sent to the base station by using the foregoing introduced Embodiments 1 to 5, the data packet may be sent at initial transmit power of a preamble and a message that is specified in an existing protocol (the power is corresponding to a case in which the preamble is transmitted only once and the message is transmitted only once). In addition, in consideration of a fact that the data packet is repeatedly sent in the solution of the present invention, to avoid a power waste in repeated transmission, the following solution for reducing transmit power of the data packet is further provided.

### Embodiment 6

Specifically, before repeatedly sending a data packet, a terminal first separately calculates actual transmit power of a preamble part and actual transmit power of a message part according to initial transmit power, a transmit power ramp step, and quantities of repeated sending, and then repeatedly sends the preamble and the message according to the actual transmit power obtained by means of calculation.

A manner of calculating the actual transmit power of the preamble and the actual transmit power of the message according to a relationship between a quantity of times the preamble part is repeatedly sent and a quantity of times the message part is repeatedly sent may be reflected in two specific cases. In addition, in consideration of a fact that a random access process may be classified into two specific implementation scenarios: an R99 random access process (a used channel is a PRACH) and an enhanced random access process (a used channel is an E-RACH), the following explains a power calculation process with reference to specific cases and scenarios.
(1) For the relationship of N=M>1, there are following two cases:
   (a) A process of calculating the actual transmit power of the preamble and the actual transmit power of the message in the PRACH scenario:
      when the preamble part is not repeatedly transmitted, a manner of calculating final transmit power P of the preamble part is: P=P₀+S×ₙ, where P₀ is initial transmit power of the preamble part, S is a transmit power ramp step of the preamble, and n is a quantity of ramping times of the preamble, where all of Po, S, and n are delivered by a high layer;
      when the preamble part is repeatedly transmitted N times, transmitting at 1/N power can achieve an objective of correctly receiving the preamble part; therefore, to reduce transmit power of a transmit end, the actual transmit power of the preamble part may be P/N, and a specific process of calculating the actual transmit power of the preamble part is: P/N=P₀/N+S×n/N.

      In the protocol, transmit power of the message part is obtained by means of calculation according to transmit power of the preamble part. Therefore, after the actual transmit power of the preamble is obtained by means of calculation, the actual transmit power of the message part may be obtained by means of calculation according to an existing method, which is not further introduced herein. In addition, it should be noted that the transmit power of the message part is specifically classified into control information transmit power and data information transmit power.
   (b) A process of calculating the actual transmit power of the preamble and the actual transmit power of the message in the E-RACH scenario:
      for the relationship of N=M>1, the process of calculating the actual transmit power in the E-RACH scenario is the same as the calculation process in the PRACH scenario. Reference may be specifically made to the foregoing introduction, and details are not described herein.
(2) For the relationship of N=1 and M>1,
   in this relationship, the preamble part is not repeatedly sent; therefore, the preamble may be transmitted at initial transmit power specified in an existing protocol, but the message part needs to be repeatedly sent M times, and in the existing protocol, sending power of the message part is set according to power of the preamble part. Therefore, to avoid a waste of the transmit power of the message part and ensure that the message part can be correctly received by the base station, the transmit power of the message part may be properly reduced. Specifically, reducing the transmit power of the message part may be classified into reducing control information transmit power and reducing data information transmit power.
   (a) A process of calculating the actual transmit power of the message in the PRACH scenario is as follows:
      An RNC (Radio Network Controller, radio network controller) delivers a parameter Pₚ₋ₘ by using a system broadcast message, and the terminal may obtain, according to a known P_{preamble}, the Pₚ₋ₘ delivered by a high layer, and the quantity M of times the message part is repeatedly sent, sending power of control information and data information of the message part by means of calculation.

      Specifically, a calculation rule Pₚ₋ₘ=P_{message-control}-P_{preamble} is used.
      Because Pₚ₋ₘ and Pp_{reamble} are known, P_{message-control} may be obtained by means of calculation according to the foregoing equation. In this calculation manner, P_{message-control} represents a value of transmit power of the control information of the message part when transmission is performed only once. In consideration of a fact that the message part needs to be repeatedly transmitted M times in the solution of the present invention, actual transmit power of the control information of the message part is P_{message-control}//M. In addition, the transmit power of the data information of the message part is set according to the control information of the message part (a power offset is used to represent a power ratio between the data information of the message part and the control information of the message part). Therefore, after the power offset of the control information and the data information of the message part is learned, actual transmit power of the data information of the message part can be learned.
      Alternatively,
      an RNC delivers, by using a system broadcast message, a parameter Pₚ₋ₘ and the quantity M of times the message part is repeatedly sent, and the terminal may obtain, according to a known Pp_{reamble} and the parameter Pₚ₋ₘ delivered by a high layer, sending power of the control information and the data information of the message part.
      Specifically, a calculation rule M×Pₚ₋ₘ=P_{message-control}-M×P_{preamble} is used.
      Because Pₚ₋ₘ, P_{preamble}, and M are known, P_{message-control} may be obtained by means of calculation according to the foregoing equation. In this calculation manner, P_{message-control} represents actual transmit power of the control information of the message part when repeated transmission is performed M times. In addition, the transmit power of the data information of the message part is set according to the control information of the message part (a power offset is used to represent a power ratio between the data information of the message part and the control information of the message part). Therefore, after the power offset of the control information and the data information of the message part is learned, actual transmit power of the data information of the message part can be learned.
   (b) A process of calculating the actual transmit power of the message in the E-RACH scenario is as follows:
      An RNC delivers a parameter Pₚ₋ₑ by using a system broadcast message, and the terminal may obtain, according to a known P_{preamble}, the parameter Pₚ₋ₑ delivered by a high layer, and the quantity M of times the message part is repeatedly sent, sending power of the control information and the data information of the message part.

Specifically, a calculation rule Pₚ₋ₑ=P_{dpcch}-P_{preamble} is used.

Because Pₚ₋ₑ and P_{preamble} are known, P_{dpcch} may be obtained by means of calculation according to the foregoing equation. In this calculation manner, P_{dpcch} represents a value of transmit power of the control information of the message part when transmission is performed only once. In consideration of a fact that the message part needs to be repeatedly transmitted M times in the solution of the present invention, actual transmit power of the control information of the message part is P_{dpcch}/M. In addition, the transmit power of the data information of the message part is set according to the control information of the message part (a power offset is used to represent a power ratio between the data information of the message part and the control information of the message part). Therefore, after the power offset of the control information and the data information of the message part is learned, actual transmit power of the data information of the message part can be learned.

Alternatively,
an RNC delivers, by using a system broadcast message, a parameter Pₚ₋ₑ and the quantity M of times the message part is repeatedly sent, and the terminal may obtain, according to a known Pp_{reamble} and the parameter Pₚ₋ₑ delivered by a high layer, sending power of the control information and the data information of the message part.

Specifically, a calculation rule M×Pₚ₋ₑ=P_{dpcch}-M×P_{preamble} is used.

Because Pₚ₋ₑ, P_{preamble}, and M are known, P_{dpcch} may be obtained by means of calculation according to the foregoing equation. In this calculation manner, P_{dpcch} represents actual transmit power of the control information of the message part when repeated transmission is performed M times. In addition, the transmit power of the data information of the message part is set according to the control information of the message part (a power offset is used to represent a power ratio between the data information of the message part and the control information of the message part). Therefore, after the power offset of the control information and the data information of the message part is learned, actual transmit power of the data information of the message part can be learned.

The data transmission process according to an embodiment of the present invention is explained above from a terminal side, and the following introduces a data transmission process on a base station side.

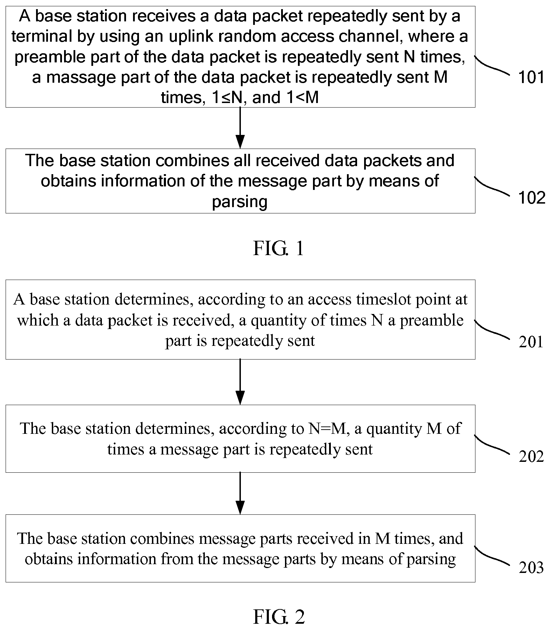

Referring to FIG. 1, FIG. 1 is a schematic diagram of a data transmission method on a base station side according to an embodiment of the present invention, and the method may include:
Step 101: A base station receives a data packet repeatedly sent by a terminal by using an uplink random access channel, where a preamble part of the data packet is repeatedly sent N times, a massage part of the data packet is repeatedly sent M times, 1≤N, and 1<M.
Step 102: The base station combines all received data packets and obtains information of the message part by means of parsing.

It can be learned with reference to the foregoing introduction of the data transmission process on the terminal side that the terminal may repeatedly send an M2M data packet to the base station, and correspondingly, after receiving all data packets repeatedly sent by the terminal, the base station may combine and parse the data packets, and obtain, by means of demodulation, information included in a message part.

Specifically, with reference to the five embodiments of sending a data packet by the terminal, the following six manners in which the base station correctly receives a data packet are provided in this embodiment of the present invention, and explanations are provided in the following one by one.

### Manner 1

For the foregoing solution in which the terminal informs the base station of the quantity of times of repeated sending in Embodiment 1, that is, the solution in which N=M>1 and the correspondence between a quantity of times the preamble is repeatedly sent and an access timeslot point is established, a manner 1 in which the base station correctly receives a data packet is provided in this embodiment of the present invention. Specifically, refer to a flowchart shown in FIG. 2.

Step 201: The base station determines, according to an access timeslot point at which the data packet is received, the quantity N of times the preamble part is repeatedly sent.

Step 202: The base station determines, according to N=M, the quantity M of times the message part is repeatedly sent.

Step 203: The base station combines message parts received in the M times, and obtains the information from the message parts by means of parsing.

It can be learned from the foregoing introduction that both the terminal and the base station learn the correspondence between a quantity of times the preamble is repeatedly sent and an access timeslot point in advance. Therefore, after receiving the preamble sent by the terminal, the base station may determine an access timeslot point corresponding to the preamble, and further determine, according to the correspondence between an access timeslot point and a quantity of times the preamble is repeatedly sent, the quantity N of times the preamble part is repeatedly sent. Further, the quantity M of times the message is repeated is the same as the quantity N of times the preamble is repeated. Therefore, the base station may correctly receive the preamble part and the message part, and obtain, by means of parsing and from the message, information transmitted by the terminal.

Corresponding to this implementation manner, an interaction process between the terminal and the base station may be reflected as follows:
First, existing 15 access timeslot points are grouped, the correspondence between an access timeslot point and a quantity of times the preamble is repeated is established, and the correspondence is configured on the base station and delivered by the base station to a corresponding terminal in a broadcasting form. That is, it is ensured that both the terminal and the base station share the pre-established correspondence before information interaction.

Then, the terminal determines, with reference to the correspondence known in advance, an access timeslot point corresponding to the quantity N of times the preamble is repeated, and repeatedly sends the data packet at the access timeslot point, where the preamble part and the message part of the data packet are repeatedly sent a same quantity of times.

Finally, the base station determines, with reference to the correspondence known in advance, the quantity N that is of times the preamble is repeated and that is corresponding to the timeslot point at which the data packet is received, and determines, according to N=M, the quantity M of times the message is repeatedly sent, and receives and combines message parts, and obtains, by means of parsing and from the message parts, information transmitted by the terminal.

### Manner 2

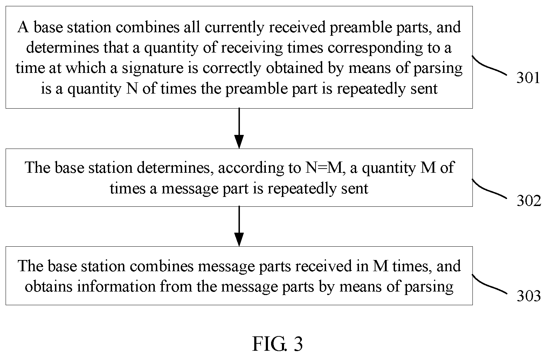

For the foregoing solution in which the terminal informs the base station of the quantity of times of repeated sending in Embodiment 2, a manner 2 in which the base station correctly receives a data packet is provided in the present invention. Specifically, refer to a flowchart shown in FIG. 3.

Step 301: The base station combines all currently received preamble parts, and determines that a quantity of receiving times corresponding to a time at which a signature is correctly obtained by means of parsing is the quantity N of times the preamble part is repeatedly sent.

Step 302: The base station determines, according to N=M, the quantity M of times the message part is repeatedly sent.

Step 303: The base station combines message parts received in the M times, and obtains the information from the message parts by means of parsing.

Each time the base station receives a preamble sent by the terminal, the base station attempts to demodulate preamble information in a manner of combination and parsing.

If the preamble information can be correctly obtained by means of demodulation, it indicates that the terminal has completed repeated sending of the preamble part. The base station may determine, according to a quantity of receiving times, the quantity N of times the preamble is repeatedly sent and further determine, according to M=N, the quantity M of times the message is repeatedly sent, and then correctly obtain, by means of parsing, information transmitted by the terminal.

If the preamble information cannot be correctly obtained by means of demodulation, it indicates that the terminal has not completed repeated sending of the preamble. The base station needs to continue to wait and receive the preamble repeatedly sent by the terminal, and constantly attempt to demodulate the preamble, until the preamble information can be correctly obtained by means of demodulation.

Corresponding to this implementation manner, an interaction process between the terminal and the base station may be reflected as follows:
First, the terminal repeatedly sends the data packet to the base station at a randomly selected access timeslot point, where the preamble part and the message part of the data packet are repeatedly sent a same quantity of times.

Then, the base station may be always in a preamble receiving state. Each time a preamble is received, the base station performs accumulation counting once on a quantity of receiving times, and attempts to perform combination and parsing once at the same time, until the preamble information can be correctly obtained by means of demodulation. In this case, a value of accumulation counting may be used as the quantity N of times the preamble is repeatedly sent.

Finally, the base station determines, according to N=M, the quantity M of times the message is repeatedly sent, receives and combines message parts according to the quantity M of times the message is repeated sent, and obtains, by means of parsing and from the message parts, information transmitted by the terminal.

### Manner 3

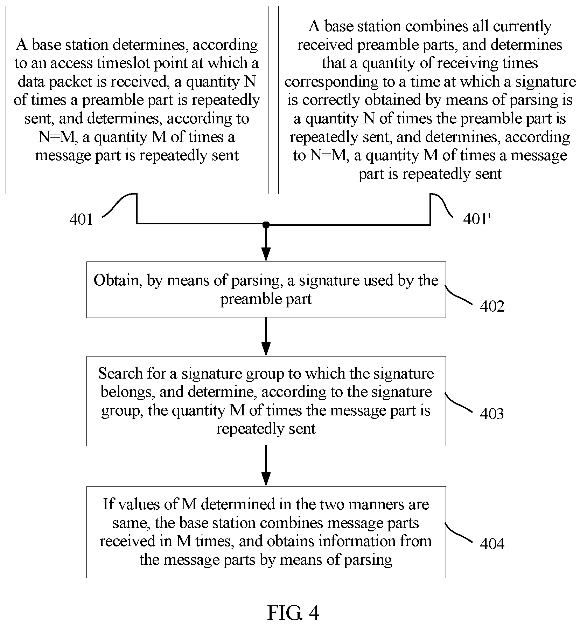

For the foregoing solution in which the terminal informs the base station of the quantity of times of repeated sending in Embodiment 3, that is, the solution in which signatures are grouped and each group is corresponding to a different quantity of times the message is repeatedly sent, a manner 3 in which the base station correctly receives a data packet is provided in the present invention. Specifically, refer to a flowchart shown in FIG. 4.

Step 401: The base station determines, according to an access timeslot point at which the data packet is received, the quantity N of times the preamble part is repeatedly sent, and determines, according to N=M, the quantity M of times the message part is repeatedly sent.

Step 402: Obtain, by means of parsing, a signature used by the preamble part.

Step 403: Search for a signature group to which the signature belongs, and determine, according to the signature group, the quantity M of times the message part is repeatedly sent.

Step 404: If values of M determined in the two manners are same, the base station combines message parts received in the M times, and obtains the information from the message parts by means of parsing.

Alternatively,
Step 401': The base station combines all currently received preamble parts, and determines that a quantity of receiving times corresponding to a time at which a signature is correctly obtained by means of parsing is the quantity N of times the preamble part is repeatedly sent, and determines, according to N=M, the quantity M of times the message part is repeatedly sent.
Step 402: Obtain, by means of parsing, a signature used by the preamble part.
Step 403: Search for a signature group to which the signature belongs, and determine, according to the signature group, the quantity M of times the message part is repeatedly sent.
Step 404: If values of M determined in the two manners are same, the base station combines message parts received in the M times, and obtains the information from the message parts by means of parsing.

That is, after determining the quantity N of times the preamble is repeatedly sent, in addition to determining, according to M=N, the quantity of times the message is repeatedly sent, the quantity of times the message is repeatedly sent may also be determined according to the signature group to which the signature belongs, and then whether the quantities of times of repeated sending determined in the two manners are the same is determined, to ensure accuracy in determining the quantity of repetition times by the base station. Specifically, for a correspondence between a signature and a signature group and a correspondence between a signature group and a quantity of times the message is repeatedly sent, reference may be made to the foregoing introduction, and details are not described herein.

It may be understood that the signature in this embodiment has the following two functions:
First, after obtaining a signature from the preamble by means of demodulation, the base station determines whether the signature is used by another terminal, and if the signature is not used by another terminal, the base station may instruct the terminal to perform a process of sending the message part M times.

Second, a signature group to which the signature obtained by means of demodulation belongs is found according to the correspondence between a signature and a signature group, and further, the quantity M of times the message part is repeatedly sent is determined according to the correspondence between a signature group and a quantity of times the message is repeated, and this value is used to verify accuracy of a value of M determined in the M=N manner, to ensure that the base station can subsequently use the value of M to correctly obtain, by means of parsing, the information transmitted by the terminal.

It should be noted that, if the values of M determined in the two manners are different, in consideration of a fact that a manner in which M is determined by using the correspondence between a signature group and a quantity of repetition times is not affected by channel quality and has high accuracy, the value of M determined in this manner may prevail, to subsequently combine and parse the message part. Alternatively, when the values of M determined in the two manners are different, other manners may further be used for processing, for example, discarding the values of M determined in the two manners, and instructing the terminal to retransmit a data packet, which may not be specifically limited in this embodiment of the present invention.

### Manner 4

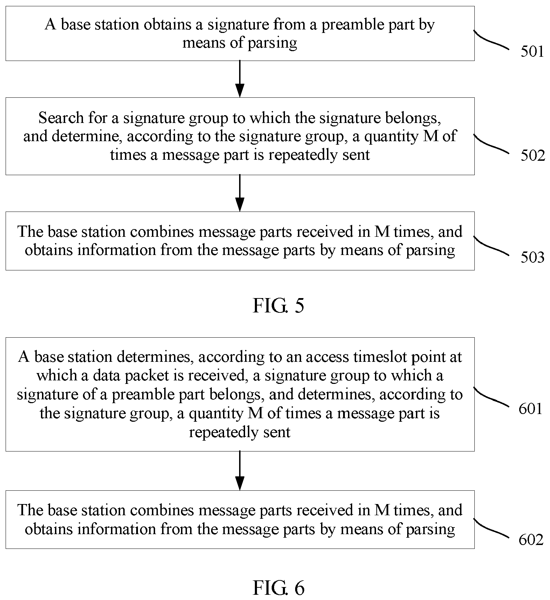

For the foregoing solution in which the terminal informs the base station of the quantity of times of repeated sending in Embodiment 3, that is, the solution in which signatures of the preamble part are grouped and each group is corresponding to a different quantity of times the message is repeatedly sent, a manner 4 in which the base station correctly receives a data packet is provided in the present invention. Specifically, refer to a flowchart shown in FIG. 5.

Step 501: The base station obtains a signature from the preamble part by means of parsing.

Step 502: Search for a signature group to which the signature belongs, and determine, according to the signature group, the quantity M of times the message part is repeatedly sent.

Step 503: The base station combines message parts received in the M times, and obtains the information from the message parts by means of parsing.

In this manner, after obtaining preamble information by means of demodulation, the base station may acquire a signature used by the preamble part from the preamble information, and determine a signature group to which the signature belongs, and further determine, according to a preconfigured correspondence between a signature group and a quantity of times of repeated sending, the quantity M of times the message is repeatedly sent, and correctly obtain, by means of parsing, information transmitted by the terminal.

It should be noted that the base station may demodulate the preamble information in the following manners: First, preconfiguring a correspondence between an access timeslot point and a quantity of times of repeated sending, correctly receiving the preamble part according to the correspondence, and obtaining the preamble information by means of demodulation; second, the base station is always in a preamble receiving state, and each time a preamble is received, the base station attempts to perform combination and parsing once, until the preamble information is correctly obtained by means of demodulation.

An example in which the preamble information is obtained by means of demodulation in a manner of constantly attempting to perform parsing is used, and an interaction process between the terminal and the base station may be reflected as follows:
First, existing 16 signatures are grouped and a correspondence between a signature group and a quantity of times the message is repeated is established, and the correspondence is configured on the base station and delivered by the base station to a corresponding terminal in a broadcasting form. That is, it is ensured that both the terminal and the base station share the pre-established correspondence before information interaction.

Then, the terminal determines, with reference to the correspondence known in advance, a signature group corresponding to the quantity M of times the message is repeatedly sent, and selects a signature used by the preamble part from the signature group, that is, a signature group to which the signature used by the preamble part of the data packet belongs is corresponding to the quantity M of times the message part of the data packet is repeatedly sent. Then, the terminal may repeatedly send the data packet to the base station at a randomly selected access timeslot point, where the preamble part and the message part of the data packet are repeatedly sent a same quantity of times.

Then, the base station is always in a preamble receiving state. Each time a preamble is received, the base station attempts to perform combination and parsing once, until the preamble information can be correctly obtained by means of demodulation. In this case, the signature used by the preamble part may be acquired from the preamble information obtained by means of parsing.

Finally, the base station determines, with reference to the correspondence known in advance, the quantity M that is of times the message is repeatedly sent and that is corresponding to the signature group to which the signature belongs, receives and combines message parts according to the quantity M, and obtains, by means of parsing and from the message parts, information transmitted by the terminal.

### Manner 5

For the foregoing solution in which the terminal informs the base station of the quantity of times of repeated sending in Embodiment 4, that is, the solution in which N=M>1 and signatures are grouped and each group is corresponding to a different quantity of times the message is repeatedly sent, a manner 5 in which the base station correctly receives a data packet is provided in this embodiment of the present invention. Specifically, refer to a flowchart shown in FIG. 6.

Step 601: The base station determines, according to the access timeslot point at which the data packet is received, a signature group to which a signature of the preamble part belongs, and determines, according to the signature group, the quantity M of times the message part is repeatedly sent.

Step 602: The base station combines message parts received in the M times, and obtains the information from the message parts by means of parsing.

That is, a correspondence between a signature group and a quantity of times the message is repeatedly sent and a correspondence between a signature group and an access timeslot point are pre-established. In this way, after receiving the data packet, the base station may first determine, according to the known correspondences, a signature group corresponding to the timeslot point at which the data packet is received, then determine, according to the signature group, a corresponding quantity M of times the message is repeatedly sent, and correctly obtain, by means of parsing, information transmitted by the terminal.

Corresponding to this implementation manner, an interaction process between the terminal and the base station may be reflected as follows:
First, the following two correspondences are established, and the two correspondences are configured on the base station, and delivered by the base station to a corresponding terminal in a broadcasting form, that is, it is ensured that both the terminal and the base station share the pre-established correspondences before information interaction:
   (1) existing 16 signatures are grouped, and a correspondence between a signature group and a quantity of times the message is repeated is established;
   (2) existing 15 access timeslot points are grouped, and a correspondence between an access timeslot point and a signature group is established.

Then, the terminal determines, with reference to the correspondences known in advance, a signature group corresponding to the quantity M of times the message is repeatedly sent and an access timeslot point corresponding to the signature group, and further, selects a signature used by the preamble from the determined signature group. Then, the terminal may repeatedly send the data packet to the base station at a selected access timeslot point, where the preamble part and the message part of the data packet are repeatedly sent a same quantity of times.

Final, the base station determines, with reference to the correspondences known in advance, the signature group corresponding to the timeslot point at which the data packet is received, and further determines the quantity M that is of times the message is repeatedly sent and that is corresponding to the signature group, receives and combines the message parts according to the quantity M, and obtains, by means of parsing, the information transmitted by the terminal.

### Manner 6

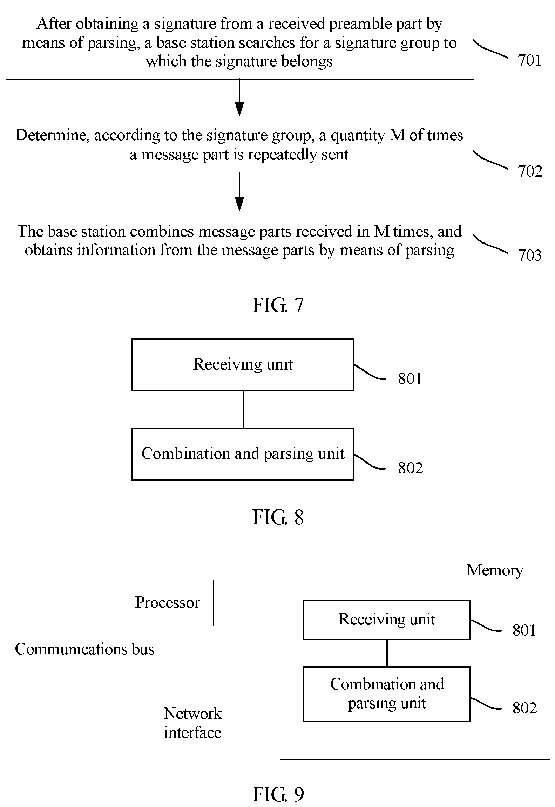

For the foregoing solution in which the terminal informs the base station of the quantity of times of repeated sending in Embodiment 4, that is, the solution in which signatures are grouped and each group is corresponding to a different quantity of times the message is repeatedly sent, N=1, and M>1, a manner 6 in which the base station correctly receives a data packet is provided in the present invention. Specifically, refer to a flowchart shown in FIG. 7.

Step 701: After obtaining a signature from the received preamble part by means of parsing, the base station searches for a signature group to which the signature belongs.

Step 702: Determine, according to the signature group, the quantity M of times the message part is repeatedly sent.

Step 703: The base station combines message parts received in the M times, and obtains the information from the message parts by means of parsing.

In this embodiment, the preamble part is not repeatedly sent. Therefore, after receiving the preamble sent by the terminal, the base station can correctly obtain preamble information by means of demodulation and obtain a signature used by the preamble from the preamble information. Before the data packet is sent, the terminal and the base station learn a correspondence between a signature group and a quantity of times the message is repeated. Therefore, after obtaining the signature used by the preamble, the base station may determine, according to the correspondence known in advance, the quantity M of times the message is repeatedly sent, so that the base station correctly receives the message part according to the quantity M, and obtains, by means of parsing and from the message part, information transmitted by the terminal. For a specific interaction process, reference may be made to the foregoing introduction, and details are not described herein.

Corresponding to the foregoing data transmission method on the terminal side, an embodiment of the present invention further provides a data transmission apparatus, that is, the terminal in the foregoing specification, and the apparatus includes:
a sending unit, configured to repeatedly send a data packet to a base station by using an uplink random access channel, so that the base station correctly receives the data packet in an energy accumulation manner, where a preamble part of the data packet is repeatedly sent N times, a massage part of the data packet is repeatedly sent M times, 1≤N, and 1<M.

Corresponding to the foregoing Embodiment 1 in which the terminal repeatedly sends a data packet, that is, the quantity of times the preamble part is repeatedly sent is corresponding to an access timeslot point and N=M, the sending unit may include:
a first timeslot point determining unit, configured to determine an access timeslot point corresponding to the quantity N of times the preamble part is repeatedly sent; and
a first sending subunit, configured to repeatedly send the data packet to the base station at the determined access timeslot point, so that the base station correctly receives the data packet.

Corresponding to the foregoing Embodiment 2 in which the terminal repeatedly sends a data packet, that is, N=M, the sending unit is specifically configured to repeatedly send the data packet at a randomly selected access timeslot point, so that the base station correctly receives the data packet.

Corresponding to the foregoing Embodiment 3 in which the terminal repeatedly sends a data packet, that is, based on Embodiment 1 and Embodiment 2, signatures are further grouped and each group is corresponding to a different quantity of times the message is repeatedly sent, the sending unit may further include:
a first signature group determining unit, configured to: determine a signature group corresponding to the quantity M of times the message part is repeatedly sent, and determine, according to the signature group, a signature used by the preamble part.

In this case, in the data packs repeatedly sent by the first sending subunit and the second sending subunit, the quantity M of times the message part is repeatedly sent is corresponding to a signature group to which the signature used by the preamble belongs.

Corresponding to the foregoing Embodiment 4 in which the terminal repeatedly sends a data packet, that is, signatures are grouped, each group is corresponding to a different access timeslot point and a different quantity of times the message is repeatedly sent, and N=M, the sending unit may include:
a second signature group determining unit, configured to determine a signature group corresponding to the quantity M of times the message part is repeatedly sent;
a second timeslot point determining unit, configured to determine, according to the signature group, an access timeslot point at which the data packet is sent and a signature used by the preamble part; and
a second sending subunit, configured to repeatedly send the data packet to the base station at the determined access timeslot point, so that the base station correctly receives the data packet.

Corresponding to the foregoing Embodiment 5 in which the terminal repeatedly sends a data packet, that is, signatures are grouped, each group is corresponding to different quantity of times the message is repeatedly sent, N=1, and M>1, the sending unit may include:
a third signature group determining unit, configured to: determine a signature group corresponding to the quantity M of times the message part is repeatedly sent, and determine, according to the signature group, a signature used by the preamble part; and
a third sending subunit, configured to repeatedly send the data packet to the base station, where the quantity M of times the message part of the data packet is repeatedly sent is corresponding to a signature group to which the signature of the preamble part of the data packet belongs.

In addition, to further reduce transmit power and avoid a power waste caused by repeated transmission of the data packet, initial transmit power specified in an existing protocol may be further reduced in an embodiment of the present invention. Correspondingly, the data transmission apparatus may further include:
a calculation unit, configured to separately calculate actual transmit power of the preamble part and actual transmit power of the message part according to initial transmit power, a transmit power ramp step, and the quantities of times of repeated sending.

Corresponding to the foregoing data transmission method on the base station side, an embodiment of the present invention further provides another data transmission apparatus, that is, the base station in the foregoing specification. As shown in FIG. 8, the apparatus may include:
a receiving unit 801, configured to receive a data packet repeatedly sent by a terminal by using an uplink random access channel, where a preamble part of the data packet is repeatedly sent N times, a massage part of the data packet is repeatedly sent M times, 1≤N, and 1<M; and
a combination and parsing unit 802, configured to: combine all received data packets, and obtain information of the message part by means of parsing.

Corresponding to the introduction in the foregoing method embodiment, the combination and parsing unit may combine the data packets and obtain the information in the message by means of parsing in six manners. The six manners are separately explained in the following.
Manner 1: If a quantity of times the preamble part is repeatedly sent is corresponding to an access timeslot point and N=M, the combination and parsing unit may include:
   a first determining unit, configured to: determine, according to an access timeslot point at which the data packet is received, the quantity N of times the preamble part is repeatedly sent, and determine, according to N=M, the quantity M of times the message part is repeatedly sent;
      and
   a combination and parsing subunit, configured to: combine message parts received in the M times, and obtain the information from the message parts by means of parsing.
Manner 2: If N=M, the combination and parsing unit may include:
   a second determining unit, configured to: combine all currently received preamble parts, determine that a quantity of receiving times corresponding to a time at which a signature is correctly obtained by means of parsing is the quantity N of times the preamble part is repeatedly sent, and determine, according to N=M, the quantity M of times the message part is repeatedly sent; and
   a combination and parsing subunit, configured to: combine message parts received in the M times, and obtain the information from the message parts by means of parsing.
Manner 3: Based on the foregoing Manner 1 and Manner 2, further, if signatures may be grouped and each group is corresponding to a different quantity of times the message part is repeatedly sent, the combination and parsing unit may further include:
   a third determining unit, configured to: after the quantity N of times the preamble part is repeatedly sent is determined, search for a signature group to which the signature belongs, and determine, according to the signature group, the quantity M of times the message part is repeatedly sent; and
   the combination and parsing subunit is specifically configured to: when the quantity of times of repeated sending determined according to the signature group is equal to the quantity of times of repeated sending determined according to N=M, combine the message parts received in the M times, and obtain the information from the message parts by means of parsing.
Manner 4: If signatures are grouped and each group is corresponding to a different quantity of times the message is repeatedly sent, the combination and parsing unit may include:
   a fourth determining unit, configured to: after a signature is obtained from the preamble part by means of parsing, search for a signature group to which the signature belongs, and determine, according to the signature group, the quantity M of times the message part is repeatedly sent; and
   a combination and parsing subunit, configured to: combine message parts received in the M times, and obtain the information from the message parts by means of parsing.
   It should be noted that for a manner of obtaining the signature from the preamble by means of parsing, reference may be made to the introduction in the foregoing method embodiment, and details are not described herein.
Manner 5: If signatures are grouped and each group is corresponding to a different access timeslot point and a different quantity of times the message is repeatedly sent, the combination and parsing unit may include:
   a fifth determining unit, configured to: determine, according to an access timeslot point at which the data packet is received, a signature group to which a signature of the preamble part belongs, and determine, according to the signature group, the quantity M of times the message part is repeatedly sent; and
   a combination and parsing subunit, configured to: combine message parts received in the M times, and obtain the information from the message parts by means of parsing.
Manner 6: If signatures are grouped, each group is corresponding to a different quantity of times the message part is repeatedly sent, N=1, and M>1, the combination and parsing unit may include:
   a sixth determining unit, configured to: after a signature is obtained from the received preamble part by means of parsing, search for a signature group to which the signature belongs, and determine, according to the signature group, the quantity M of times the message part is repeatedly sent; and
   a combination and parsing subunit, configured to: combine message parts received in the M times, and obtain the information from the message parts by means of parsing.

Further, an embodiment of the present invention further provides hardware composition of a data transmission apparatus. The data transmission apparatus may include at least one processor (for example, a CPU), at least one network interface or another communications interface, a memory, and at least one communications bus used for implementing connection and communication between these apparatuses. The processor is configured to execute an executable module such as a computer program stored in the memory. The memory may include a high-speed random access memory (RAM: Random Access Memory), or may further include a non-volatile memory (non-volatile memory) such as at least one magnetic disk memory. The at least one network interface (which may be wired or wireless) is used to implement a communication connection between the system gateway and at least one other network element by using the Internet, a wide area network, a local area network, a metropolitan area network, or the like.

In some implementation manners, the memory stores a program instruction, and the program instruction may be executed by the processor. Referring to FIG. 9, FIG. 9 shows a schematic diagram of hardware composition of a data transmission apparatus on a base station side according to an embodiment of the present invention, where the program instruction includes a receiving unit 801 and a combination and parsing unit 802. For specific implementation of the units, refer to corresponding units disclosed in FIG. 8.

In addition, an embodiment of the present invention further provides a hardware composition solution of a data transmission apparatus on a terminal side. Correspondingly, the program instruction stored in the memory may include a sending unit, or may further include a calculation unit; details are not described herein.

Based on the descriptions of the foregoing implementation manners, a person skilled in the art may clearly understand that some or all steps of the methods in the foregoing embodiments may be implemented by software in addition to a necessary universal hardware platform. Based on such an understanding, the technical solutions of the present invention essentially or the part contributing to the prior art may be implemented in a form of a software product. The software product may be stored in a storage medium such as a ROM/RAM, a magnetic disk, or an optical disc, and includes several instructions for instructing a computer device (which may be a personal computer, a server, or a network communication device such as media gateway) to perform the methods described in the embodiments or some parts of the embodiments of the present invention.

It should be noted that the embodiments in this specification are all described in a progressive manner, for same or similar parts in the embodiments, reference may be made to these embodiments, and each embodiment focuses on a difference from other embodiments. Especially, device and system embodiments are basically similar to a method embodiment, and thereby are described briefly; for related parts, reference may be made to partial descriptions in the method embodiment. The described device and system embodiments are merely exemplary. The units described as separate parts may or may not be physically separate, and parts displayed as units may or may not be physical units, may be located in one position, or may be distributed on a plurality of network units. Some or all modules may be selected according to actual needs to achieve the objectives of the solutions of the embodiments. A person of ordinary skill in the art may understand and implement the embodiments of the present invention without creative efforts.

In short, the foregoing descriptions are merely exemplary embodiments of the present invention, but are not intended to limit the protection scope of the present invention. Any modification, equivalent replacement, or improvement made without departing from the principle of the present invention shall fall within the protection scope of the present invention.

## Claims

1. A data transmission method, wherein the method comprises:
repeatedly sending, by a terminal, a data packet to a base station by using an uplink random access channel, so that the base station correctly receives the data packet in an energy accumulation manner, wherein a preamble part of the data packet is repeatedly sent N times, a message part of the data packet is repeatedly sent M times, 1≤N, and 1<M.

2. The method according to claim 1, wherein if a quantity of times the preamble part is repeatedly sent is corresponding to an access timeslot point and N=M, the repeatedly sending, by a terminal, a data packet to a base station by using an uplink random access channel comprises:
determining, by the terminal, an access timeslot point corresponding to the quantity N of times the preamble part is repeatedly sent; and
repeatedly sending, by the terminal, the data packet to the base station at the determined access timeslot point, so that the base station correctly receives the data packet.

3. The method according to claim 1, wherein if N=M, the repeatedly sending, by a terminal, a data packet to a base station by using an uplink random access channel comprises:
repeatedly sending, by the terminal, the data packet to the base station at a randomly selected access timeslot point, so that the base station correctly receives the data packet.

4. The method according to claim 2 or 3, wherein if signatures of the preamble part are grouped and each group is corresponding to a different quantity of times the message part is repeatedly sent, the repeatedly sending, by a terminal, a data packet to a base station by using an uplink random access channel further comprises:
determining, by the terminal, a signature group corresponding to the quantity M of times the message part is repeatedly sent, and determining, according to the signature group, a signature used by the preamble part.

5. The method according to claim 1, wherein if signatures of the preamble part are grouped, each group is corresponding to a different access timeslot point and a different quantity of times the message part is repeatedly sent, and N=M, the repeatedly sending, by a terminal, a data packet to a base station by using an uplink random access channel comprises:
determining, by the terminal, a signature group corresponding to the quantity M of times the message part is repeatedly sent;
determining, by the terminal according to the signature group, an access timeslot point at which the data packet is sent and a signature used by the preamble part; and
repeatedly sending, by the terminal, the data packet to the base station at the determined access timeslot point, so that the base station correctly receives the data packet.

6. The method according to claim 1, wherein if signatures of the preamble part are grouped, each group is corresponding to a different quantity of times the message part is repeatedly sent, N=1, and M>1, the repeatedly sending, by a terminal, a data packet to a base station by using an uplink random access channel comprises:
determining, by the terminal, a signature group corresponding to the quantity M of times the message part is repeatedly sent, and determining, according to the signature group, a signature used by the preamble part.

7. The method according to any one of claims 1 to 6, wherein the method further comprises:
separately calculating actual transmit power of the preamble part and actual transmit power of the message part according to initial transmit power, a transmit power ramp step, and the quantities of times of repeated sending.

8. A data transmission method, wherein the method comprises:
receiving, by a base station, a data packet repeatedly sent by a terminal by using an uplink random access channel, wherein a preamble part of the data packet is repeatedly sent N times, a massage part of the data packet is repeatedly sent M times, 1≤N, and 1<M; and
combining, by the base station, all received data packets and obtaining information of the message part by means of parsing.

9. The method according to claim 8, wherein if a quantity of times the preamble part is repeatedly sent is corresponding to an access timeslot point and N=M, the combining, by the base station, all received data packets and obtaining information of the message part by means of parsing comprises:
determining, by the base station according to an access timeslot point at which the data packet is received, the quantity N of times the preamble part is repeatedly sent and determining, according to N=M, the quantity M of times the message part is repeatedly sent; and
combining, by the base station, message parts received in the M times, and obtaining the information from the message parts by means of parsing.

10. The method according to claim 8, wherein if N=M, the combining, by the base station, all received data packets and obtaining information of the message part by means of parsing comprises:
combining, by the base station, all currently received preamble parts, determining that a quantity of receiving times corresponding to a time at which a signature is correctly obtained by means of parsing is the quantity N of times the preamble part is repeatedly sent, and determining, according to N=M, the quantity M of times the message part is repeatedly sent; and
combining, by the base station, message parts received in the M times, and obtaining the information from the message parts by means of parsing.

11. The method according to claim 9 or 10, wherein if signatures of the preamble part are grouped and each group is corresponding to a different quantity of times the message part is repeatedly sent, the combining, by the base station, all received data packets and obtaining information of the message part by means of parsing further comprises:
after determining the quantity N of times the preamble part is repeatedly sent, searching, by the base station, for a signature group to which the signature belongs, and determining, according to the signature group, the quantity M of times the message part is repeatedly sent; and
the combining, by the base station, message parts received in the M times, and obtaining the information from the message parts by means of parsing comprises:
when the quantity of times of repeated sending determined according to the signature group is equal to the quantity of times of repeated sending determined according to N=M, performing, by the base station, the step of combining message parts received in the M times.

12. The method according to claim 8, wherein if signatures of the preamble part are grouped and each group is corresponding to a different quantity of times the message part is repeatedly sent, the combining, by the base station, all received data packets and obtaining information of the message part by means of parsing comprises:
after obtaining a signature from the preamble part by means of parsing, searching, by the base station, for a signature group to which the signature belongs, and determining, according to the signature group, the quantity M of times the message part is repeatedly sent; and
combining, by the base station, message parts received in the M times, and obtaining the information from the message parts by means of parsing.

13. The method according to claim 8, wherein if signatures of the preamble part are grouped, and each group is corresponding to a different access timeslot point and a different quantity of times the message part is repeatedly sent, the combining, by the base station, all received data packets and obtaining information of the message part by means of parsing comprises:
determining, by the base station according to an access timeslot point at which the data packet is received, a signature group to which a signature of the preamble part belongs, and determining, according to the signature group, the quantity M of times the message part is repeatedly sent; and
combining, by the base station, message parts received in the M times, and obtaining the information from the message parts by means of parsing.

14. The method according to claim 8, wherein if signatures of the preamble part are grouped, each group is corresponding to a different quantity of times the message part is repeatedly sent, N=1, and M>1, the combining, by the base station, all received data packets and obtaining information of the message part by means of parsing comprises:
after obtaining a signature from the received preamble part by means of parsing, searching, by the base station, for a signature group to which the signature belongs, and determining, according to the signature group, the quantity M of times the message part is repeatedly sent; and
combining, by the base station, message parts received in the M times, and obtaining the information from the message parts by means of parsing.

15. A data transmission apparatus, wherein the apparatus comprises:
a sending unit, configured to repeatedly send a data packet to a base station by using an uplink random access channel, so that the base station correctly receives the data packet in an energy accumulation manner, wherein a preamble part of the data packet is repeatedly sent N times, a massage part of the data packet is repeatedly sent M times, 1≤N, and 1<M.

16. The apparatus according to claim 15, wherein if a quantity of times the preamble part is repeatedly sent is corresponding to an access timeslot point and N=M, the sending unit comprises:
a first timeslot point determining unit, configured to determine an access timeslot point corresponding to the quantity N of times the preamble part is repeatedly sent; and
a first sending subunit, configured to repeatedly send the data packet to the base station at the determined access timeslot point, so that the base station correctly receives the data packet.

17. The apparatus according to claim 15, wherein if N=M,
the sending unit is specifically configured to repeatedly send the data packet to the base station at a randomly selected access timeslot point, so that the base station correctly receives the data packet.

18. The apparatus according to claim 16 or 17, wherein if signatures of the preamble part are grouped and each group is corresponding to a different quantity of times the message part is repeatedly sent, the sending unit further comprises:
a first signature group determining unit, configured to: determine a signature group corresponding to the quantity M of times the message part is repeatedly sent, and determine, according to the signature group, a signature used by the preamble part.

19. The apparatus according to claim 15, wherein if signatures of the preamble part are grouped, each group is corresponding to a different access timeslot point and a different quantity of times the message part is repeatedly sent, and N=M, the sending unit comprises:
a second signature group determining unit, configured to determine a signature group corresponding to the quantity M of times the message part is repeatedly sent;
a second timeslot point determining unit, configured to determine, according to the signature group, an access timeslot point at which the data packet is sent and a signature used by the preamble part; and
a second sending subunit, configured to repeatedly send the data packet to the base station at the determined access timeslot point, so that the base station correctly receives the data packet.

20. The apparatus according to claim 15, wherein if signatures of the preamble part are grouped, each group is corresponding to a different quantity of times the message part is repeatedly sent, N=1, and M>1, the sending unit comprises:
a third signature group determining unit, configured to: determine a signature group corresponding to the quantity M of times the message part is repeatedly sent, and determine, according to the signature group, a signature used by the preamble part; and
a third sending subunit, configured to repeatedly send the data packet to the base station, wherein the quantity M of times the message part of the data packet is repeatedly sent is corresponding to a signature group to which the signature of the preamble part of the data packet belongs.

21. The apparatus according to any one of claims 15 to 20, wherein: the apparatus further comprises:
a calculation unit, configured to separately calculate actual transmit power of the preamble part and actual transmit power of the message part according to initial transmit power, a transmit power ramp step, and the quantities of times of repeated sending.

22. A data transmission apparatus, wherein the apparatus comprises:
a receiving unit, configured to receive a data packet repeatedly sent by a terminal by using an uplink random access channel, wherein a preamble part of the data packet is repeatedly sent N times, a massage part of the data packet is repeatedly sent M times, 1≤N, and 1<M; and
a combination and parsing unit, configured to combine all received data packets and obtain information of the message part by means of parsing.

23. The apparatus according to claim 22, wherein if a quantity of times the preamble part is repeatedly sent is corresponding to an access timeslot point and N=M, the combination and parsing unit comprises:
a first determining unit, configured to: determine, according to an access timeslot point at which the data packet is received, the quantity N of times the preamble part is repeatedly sent, and determine, according to N=M, the quantity M of times the message part is repeatedly sent; and
a combination and parsing subunit, configured to: combine message parts received in the M times, and obtain the information from the message parts by means of parsing.

24. The apparatus according to claim 22, wherein if N=M, the combination and parsing unit comprises:
a second determining unit, configured to: combine all currently received preamble parts, determine that a quantity of receiving times corresponding to a time at which a signature is correctly obtained by means of parsing is the quantity N of times the preamble part is repeatedly sent, and determine, according to N=M, the quantity M of times the message part is repeatedly sent; and
a combination and parsing subunit, configured to: combine message parts received in the M times, and obtain the information from the message parts by means of parsing.

25. The apparatus according to claim 23 or 24, wherein if signatures of the preamble part are grouped and each group is corresponding to a different quantity of times the message part is repeatedly sent, the combination and parsing unit further comprises:
a third determining unit, configured to: after the quantity N of times the preamble part is repeatedly sent is determined, search for a signature group to which the signature belongs, and determine, according to the signature group, the quantity M of times the message part is repeatedly sent; and
the combination and parsing subunit is specifically configured to: when the quantity of times of repeated sending determined according to the signature group is equal to the quantity of times of repeated sending determined according to N=M, combine the message parts received in the M times, and obtain the information from the message parts by means of parsing.

26. The apparatus according to claim 22, wherein if signatures of the preamble part are grouped and each group is corresponding to a different quantity of times the message part is repeatedly sent, the combination and parsing unit comprises:
a fourth determining unit, configured to: after a signature is obtained from the preamble part by means of parsing, search for a signature group to which the signature belongs, and determine, according to the signature group, the quantity M of times the message part is repeatedly sent; and
a combination and parsing subunit, configured to: combine message parts received in the M times, and obtain the information from the message parts by means of parsing.

27. The apparatus according to claim 22, wherein if signatures of the preamble part are grouped and each group is corresponding to a different access timeslot point and a different quantity of times the message part is repeatedly sent, the combination and parsing unit comprises:
a fifth determining unit, configured to: determine, according to an access timeslot point at which the data packet is received, a signature group to which a signature of the preamble part belongs, and determine, according to the signature group, the quantity M of times the message part is repeatedly sent; and
a combination and parsing subunit, configured to: combine message parts received in the M times, and obtain the information from the message parts by means of parsing.

28. The apparatus according to claim 22, wherein if signatures of the preamble part are grouped, each group is corresponding to a different quantity of times the message part is repeatedly sent, N=1, and M>1, the combination and parsing unit comprises:
a sixth determining unit, configured to: after a signature is obtained from the received preamble part by means of parsing, search for a signature group to which the signature belongs, and determine, according to the signature group, the quantity M of times the message part is repeatedly sent; and
a combination and parsing subunit, configured to: combine message parts received in the M times, and obtain the information from the message parts by means of parsing.

29. A data transmission apparatus, wherein the apparatus comprises: at least one processor, at least one network interface, a memory, and at least one communications bus;
the communications bus is configured to implement connection and communication between the at least one processor, the at least one network interface, and the memory;
the at least one processor is configured to execute a program instruction stored in the memory, wherein the program instruction comprises a sending unit; and
the sending unit is configured to repeatedly send a data packet to a base station by using an uplink random access channel, so that the base station correctly receives the data packet in an energy accumulation manner, wherein a preamble part of the data packet is repeatedly sent N times, a massage part of the data packet is repeatedly sent M times, 1≤N, and 1<M.

30. The apparatus according to claim 29, wherein the program instruction further comprises a calculation unit; and
the calculation unit is configured to separately calculate actual transmit power of the preamble part and actual transmit power of the message part according to initial transmit power, a transmit power ramp step, and quantities of times of repeated sending.

31. A data transmission apparatus, wherein the apparatus comprises: at least one processor, at least one network interface, a memory, and at least one communications bus;
the communications bus is configured to implement connection and communication between the at least one processor, the at least one network interface, and the memory;
the at least one processor is configured to execute a program instruction stored in the memory, wherein the program instruction comprises a receiving unit and a combination and parsing unit;
the receiving unit is configured to receive a data packet repeatedly sent by a terminal by using an uplink random access channel, wherein a preamble part of the data packet is repeatedly sent N times, a massage part of the data packet is repeatedly sent M times, 1≤N, and 1<M; and
the combination and parsing unit is configured to combine all received data packets and obtain information of the message part by means of parsing.
